# EUROPEAN PATENT APPLICATION

(11) **EP 1 936 554 A1**
(43) Date of publication of application: **25.06.2008**
(21) Application number: 06127158.1
(22) Date of filing: 22.12.2006
(51) Int. Cl.: G06Q 10/00

(54) **Method for the automatic recording of the time needed to carry on activities and for the creation of specific work maps**

(71) Applicant: PRB S.r.l., 20135 Milano (IT)
(72) Inventor: Carbonera, Antonio, PAVIA, 27100 (IT); Forlani, Paolo, MILANO, 20135 (IT)
(74) Representative: Borsano, Corrado

(57) **Abstract**

The present invention provides for a method for the automatic recording of the time needed to carry on activities and for the creation of specific work maps, characterized in that it comprises the following steps:
- presenting on a computer screen a graphical map, where items, documents and actions are represented by icons or lists, each action being started by mouse or keyboard operations on one or more of said items;
- creating a configuration table including a list of event types related to said actions, and for each event type the kind of action to be performed and the relating data of the event;
- creating an "Events" database table, where a record is added every time an event occurs, said record including a number of fields related to the event;
- whenever an event occurs, starting the following actions: scanning the configuration table to find the kind of the event; reading the table to understand where the data of the event can be found; preparing a record for the event; storing it in the "Events" database table.

## Description

The present invention relates to a method for the automatic recording of the time needed to carry on activities and for the creation of specific work maps.

In the field of informatics, there are known programs, suitable as tools to plan, record and control the times needed to carry on activities in small and big organizations.

These programs, in a first phase, allow to insert data about all the activities that make up a project or a business item and to insert, for each of these activities, a planned execution time.

The ordered time series permits to generate the complete planning of a complex activity.

In a second phase, the real execution times are input in the system and it is possible to assess the real total and partial times at any wanted level of detail.

Both in the estimate phase and in the assessment one it is possible to create statistic data about the times, thus about costs, by aggregating data according to flexible criteria.

The recording of times is made by the operators always in manual mode, often at the end of the day or even at the end of the week: recorded times are then very approximate, it is easy to forget completely one or more activities and it is not possible to arrive to a good detail without an unacceptable waste of human time for recordings.

Moreover, it is extremely hard to take note of detailed times, such as the time needed for the several modifications, at a time distance between one and another and made by different persons, that are necessary to arrive to the final version of a single document.

The result is that the organization of the work is improvised and there are no tools to improve it.

Therefore a problem arises in terms of difficult and time consuming users interfacing procedures to plan, record and control the times needed to carry on activities.

It is not yet known a solution to the technical problem of making the recording of the time needed to carry on activities and the creation of specific work maps completely automatic and immediate, so as to considerably save computer time and resources, in terms of number of program instructions or routines to be performed.

Therefore the purpose of the present invention is to solve the aforementioned problems, and to provide a method for recording of the time needed to carry on activities and for the creation of specific work maps, which is completely automatic and immediate.

It is a particular subject of the present invention a method for the automatic recording of the time needed to carry on activities and for the creation of specific work maps, characterized in that it provides for automatic recording of times, based on elements extracted from the activities in the exact moment when events occur; also characterized in that it comprises the following steps:
- presenting on a computer screen a graphical map, where items, documents and actions are represented by icons or lists, each action being started by mouse or keyboard operations on one or more of said items;
- creating a configuration table including a list of event types related to said actions, and for each event type the kind of action to be performed and the relating data of the event;
- creating an "Events" database table, where a record is added every time an event occurs, said record including a number of fields related to the event;
- whenever an event occurs, starting the following actions:
   - scanning the configuration table to find the kind of the event;
   - reading the table to understand where the data of the event can be found;
   - preparing a record for the event;
   - storing it in the "Events" database table.

These and further objects are achieved by means of a method for the automatic recording of the time needed to carry on activities and for the creation of specific work maps, as described in the attached claims, which are considered an integral part of the present description.

The invention will become fully clear from the following detailed description, given by way of a mere exemplifying and non limiting example, to be read with reference to the attached drawing figures, wherein:
- Figure 1 shows an example of screen with a graphical map, where all items, documents and actions of his daily job are represented by icons or lists, according to the method subject of the invention;
- Figure 2 shows an example of a configuration table and an "Event" database table created according to the method;
- Figure 3 shows a schematic diagrams with an overall view of the operation of the computer program which implements the method;
- Figure 4 shows a flow-charts of a part of the computer program.

The method provides for the automatic recording of times, without user intervention and without any manual operation, based on elements extracted by the information system in the exact moment when events occur, such as for instance:
- The opening of a document to modify it, and its closure;
- The start and end of the activities of the day;
- The start and end of a telephone conversation;
- The sending and receiving of a message.

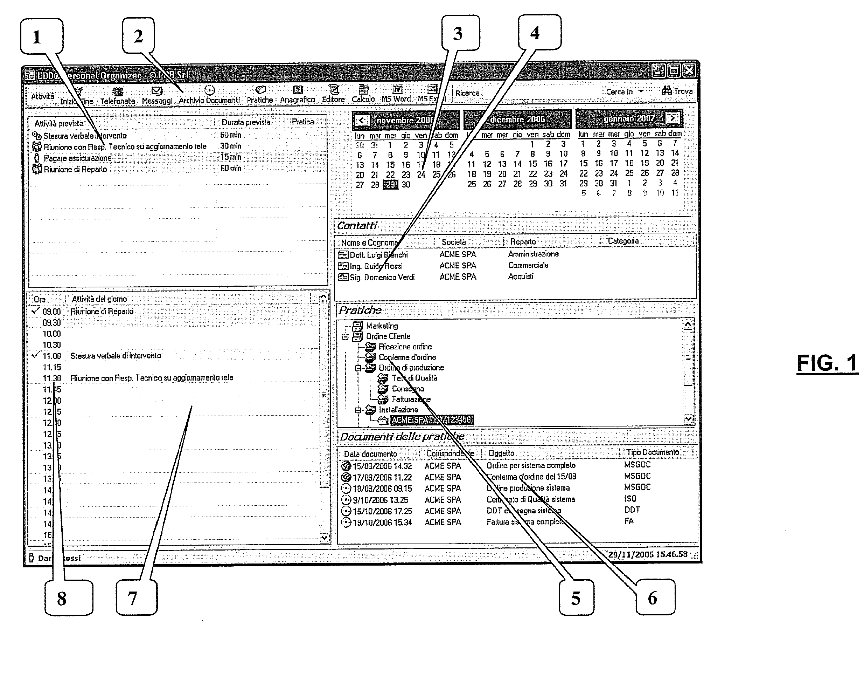

With reference to figure 1, in a typical arrangement, the method provides for activation of a main procedure (implemented by a main computer program), presenting to the user a graphical map, where all items, documents and actions of his daily job are represented by icons or lists.

The icons or lists include for instance:
1 = Activities to be done;
2 = Function buttons;
3 = Calendar;
4 = Contacts (Correspondents, Colleagues);
5 = Business Dossiers;
6 = Documents in business dossiers;
7 = Activities of the day;
8 = Start time.

Each action of the user is started by mouse or keyboard operations on one or more of these items, and, if it is the case, the main procedure provides for performing subsequent actions, including activation of other relating computer programs. For instance, if the user double clicks the name of a text document, the text editor is started with the document opened, and, when the user has finished the modifications of the document, he closes the editor and control goes back to the main program.

In this way, all relevant actions done by the user pass through the main procedure that can easily "take note" of the date and time of each operation. The name of the user, of the document and all other information about the business dossier are already in the system and the main procedure can access it to integrate time data: for instance, the name of the customer that sent a message, the kind of business it is related to, the steps it has already passed in the business process and so on. With all these data besides time information, the main procedure creates detailed database records and stores them.

The operation of the time recording method is based upon a configuration table that can be in any suitable computer data format (database or other). This table is prepared by technical people in a configuration phase and is not accessible by the normal user.

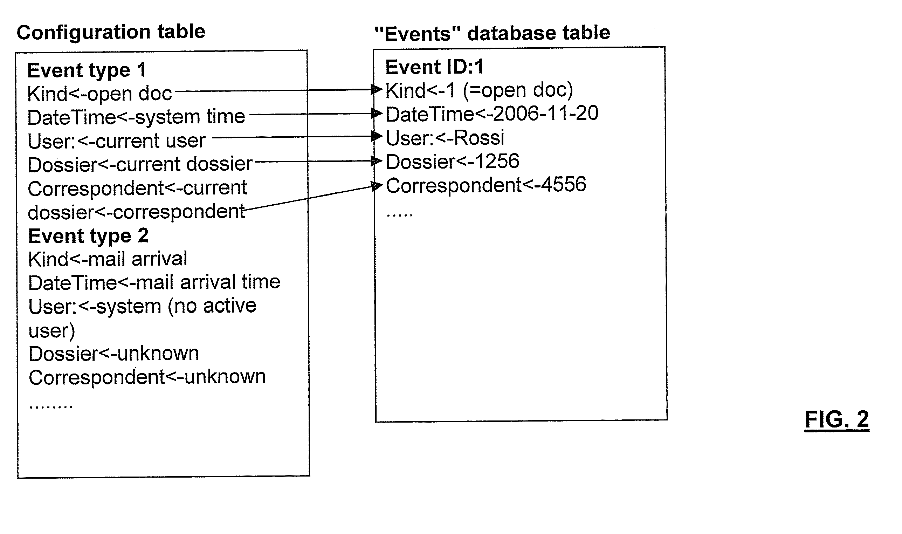

With reference to the example of figure 2, the configuration table includes a list of event types, and for each event type the kind of action to be performed and the relating data of the event:

### Event type 1

Kind: open doc
DateTime: system time
User:current user
Dossier: current dossier
Correspondent: current dossier: correspondent

**Event type 2**
Kind: mail arrival
DateTime: mail arrival time
User:system (no active user)
Dossier: unknown
Correspondent: unknown

Besides the configuration table, the main procedure creates a destination database table, called "Events" database table, where a record is added every time an event occurs. The records in this table include several fields related to the event, for instance:
- Date/time: exact date and time when the event happened (mandatory)
- Kind of event (system event, i.e. arrival of a mail; or user event, i.e. opening of a document)
- User that caused the event (if any)
- Business dossier the event is related to
- Correspondent name

Whenever an event happens in the system, the main procedure starts the following actions:
- scanning the configuration table to find the kind of the event;
- reading the table to understand where the data of the event can be found;
- preparing a record for the event;
- storing it in the "Events" database table.

For instance, as it can be seen in figure 2, the user opens a business dossier (Event type 1) and then a document inside the dossier (Event type 2); "Events" data to be stored in the "Events" database table are:
- Kind of event: "Open document" (ordinal number, ID, of this kind of event);
- Date/time: system time at the moment of the event;
- User (ID number of the user);
- Dossier (ID number of dossier opened by the user);
- Correspondent (ID number of correspondent linked to the dossier in the business database).

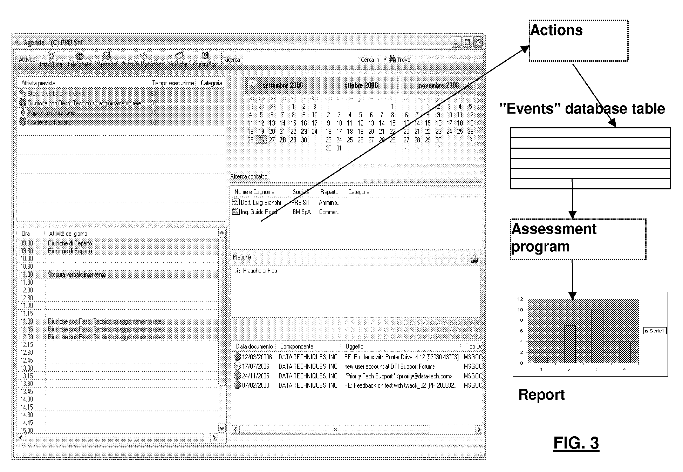

As shown in figure 3, preferably, in a subsequent phase, with the search procedures available in all database systems (queries), assessment programs can aggregate data and create reports of any kind. One simple report, for instance, can totalize all the times needed to carry a business item from the beginning to the end, and also compute the total cost by multiplying each time by the hourly cost of each operator involved.

Preferably, for each type of report wanted, a search (database query) is made upon the "Events" table, using a certain number of fields to limit the search; resulting record fields are then used to prepare a report in text or graphical form. For instance, the times a certain user spent for each of the dossiers he worked upon in the last year can be listed or drawn as a histogram.

A possible addition to the above method is the automatic proposal of the following steps of a business process.

Business processes normally follow standardized paths within an organization and all these normal paths are stored in appropriate configuration tables ("Process" tables).

From the previous history of an item (the steps it has undergone already), the program can find the most suitable "normal path" it should follow and automatically will propose to the operator the recommended sequence for the following steps in a work map.

If a given business process has already undergone several phases, and in one of the configuration table a process starting with these phases can be found, then the proposed follow up of the process will consist in the remaining phases in the table.

As a possible simplified instance, the steps of the approval of a loan request by a bank are:
1- Receiving of a fax with the request
2- Reading and approval by a clerk
3- Approval by the office manager
4- Approval by the managing board
5- Sending of a confirmation fax to the requester.
   If a request has arrived by fax (step 1) and has been approved by a clerk (step 2), it is not necessary for the clerk to submit the request to the following steps 3,4 and 5, because the program finds, by the history of the request, the work map of the following phases. The request will then be automatically submitted to phases 3 and 4, and after them the fax sending program will be automatically activated to send the configmration to the requester.

Therefore the following steps can be added to the method:
- Preparing configuration tables for all the normal paths of business items or "work maps";
- Every time a business step is done, searching the tables to understand, by the steps aleady passed, if an item can be associated to one of the records in the table;
- If a normal work map can be found, proposing the following steps to the user or executing directly one or more steps.

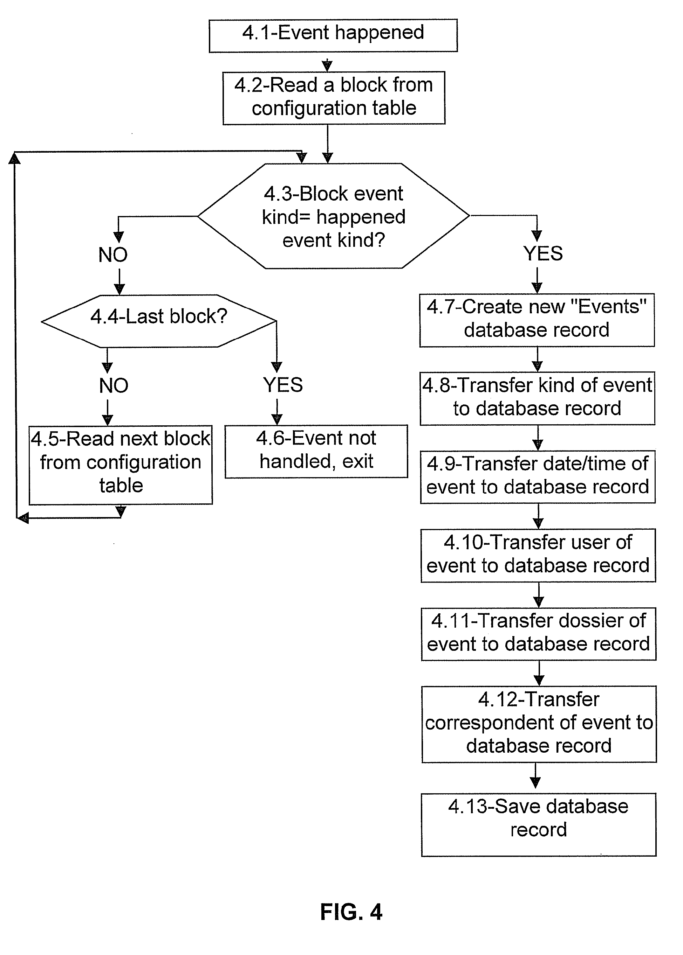

The figure 4 shows an example of flow chart of the computer program implementing the method, relating to the functions of extracting time and other data and storing them to the destination database.

The flow charts are self explanatory and are considered to be integral with this description, and therefore there is no need to describe them in details here.

As an example of a computer program implementation of the method subject of the invention, in the following a listing is given of a piece of code that, in a typical implementation of a Visual Basic program that carries out the method, performs a part of the program relating to the functions of extracting time and other data and storing them to the destination database (see in particular the underlined instructions).

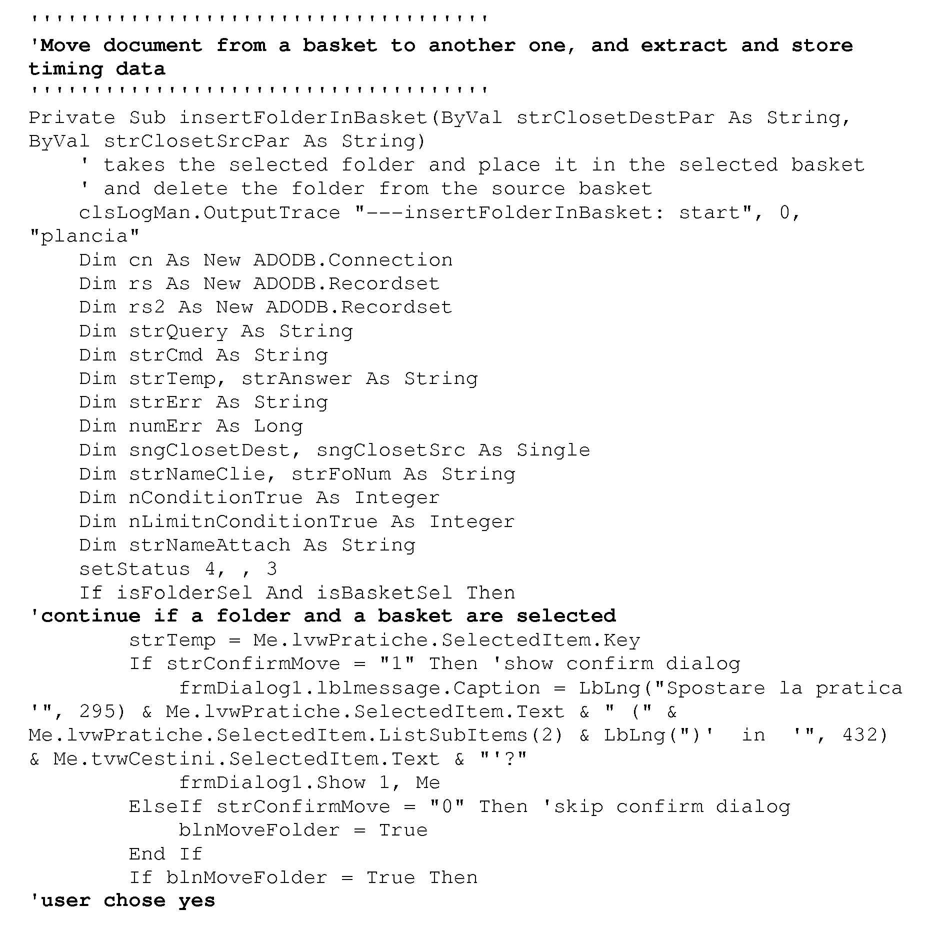

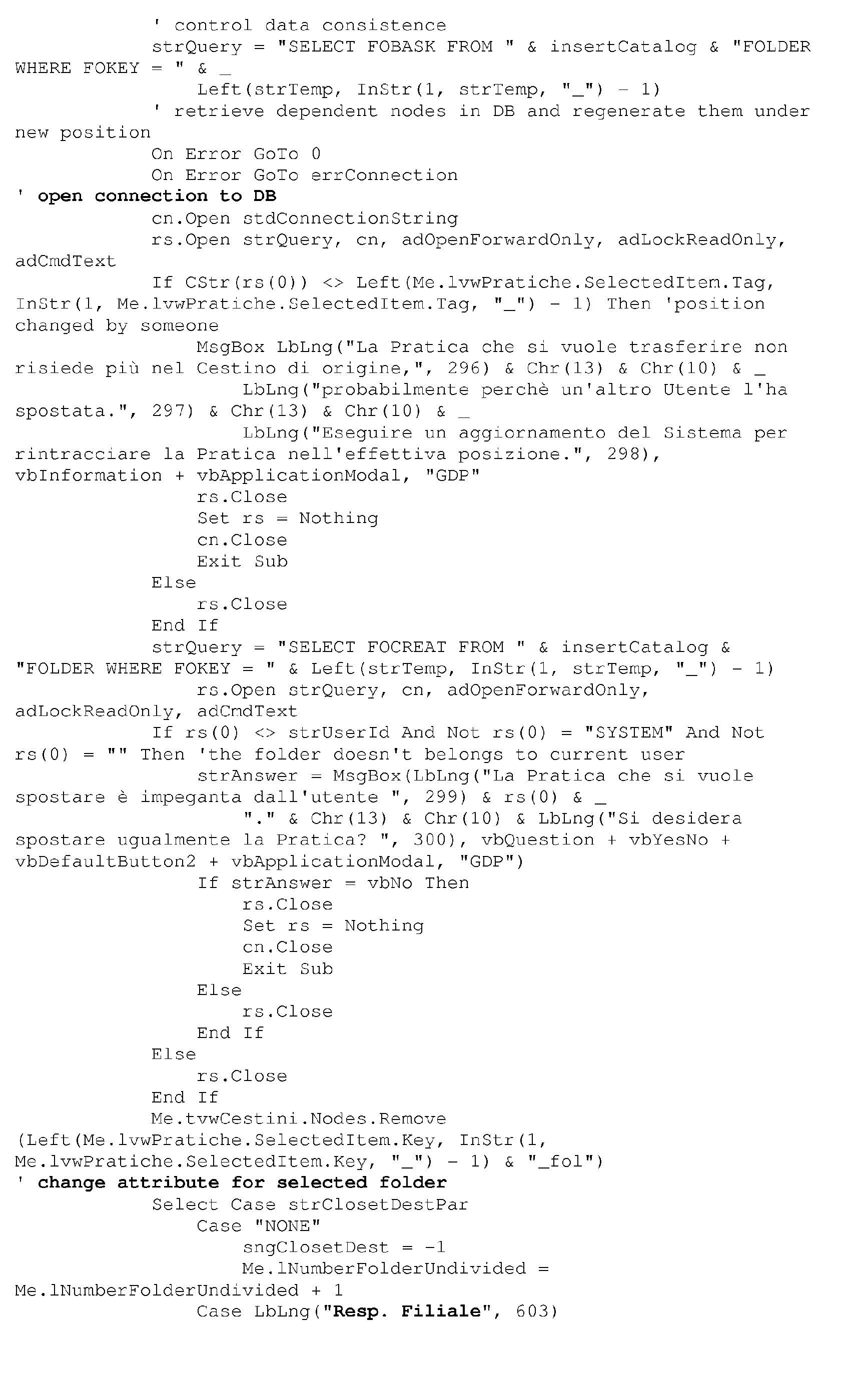

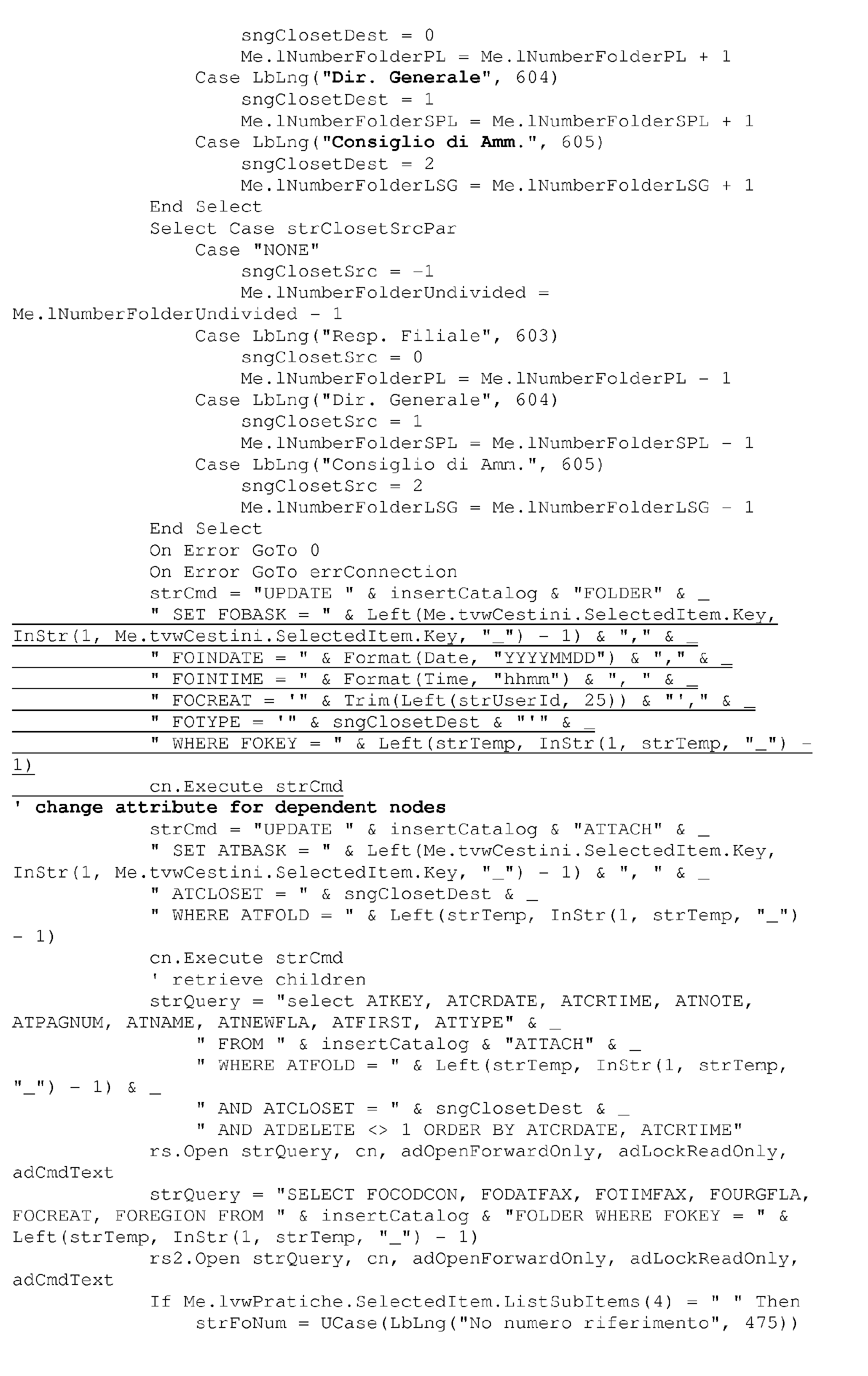

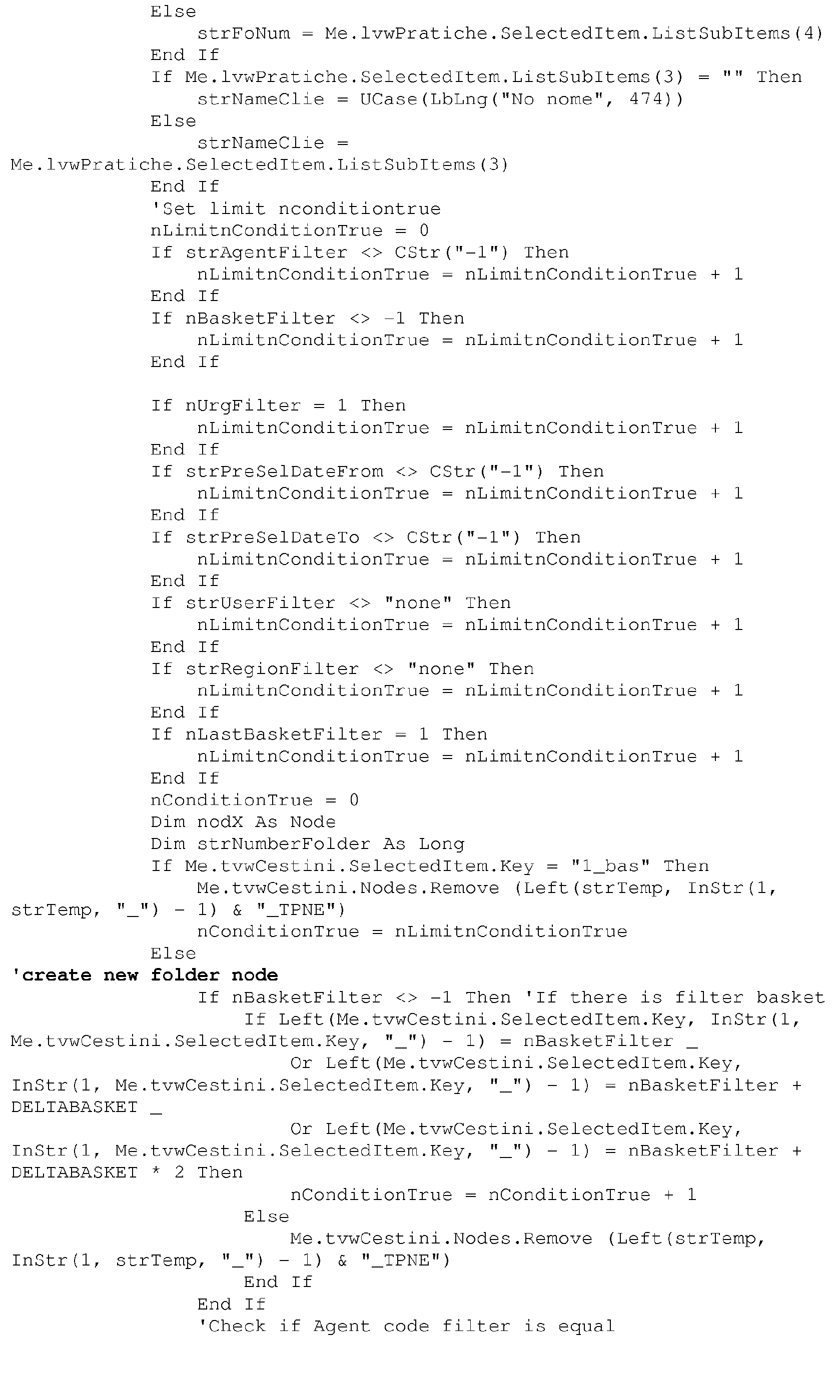

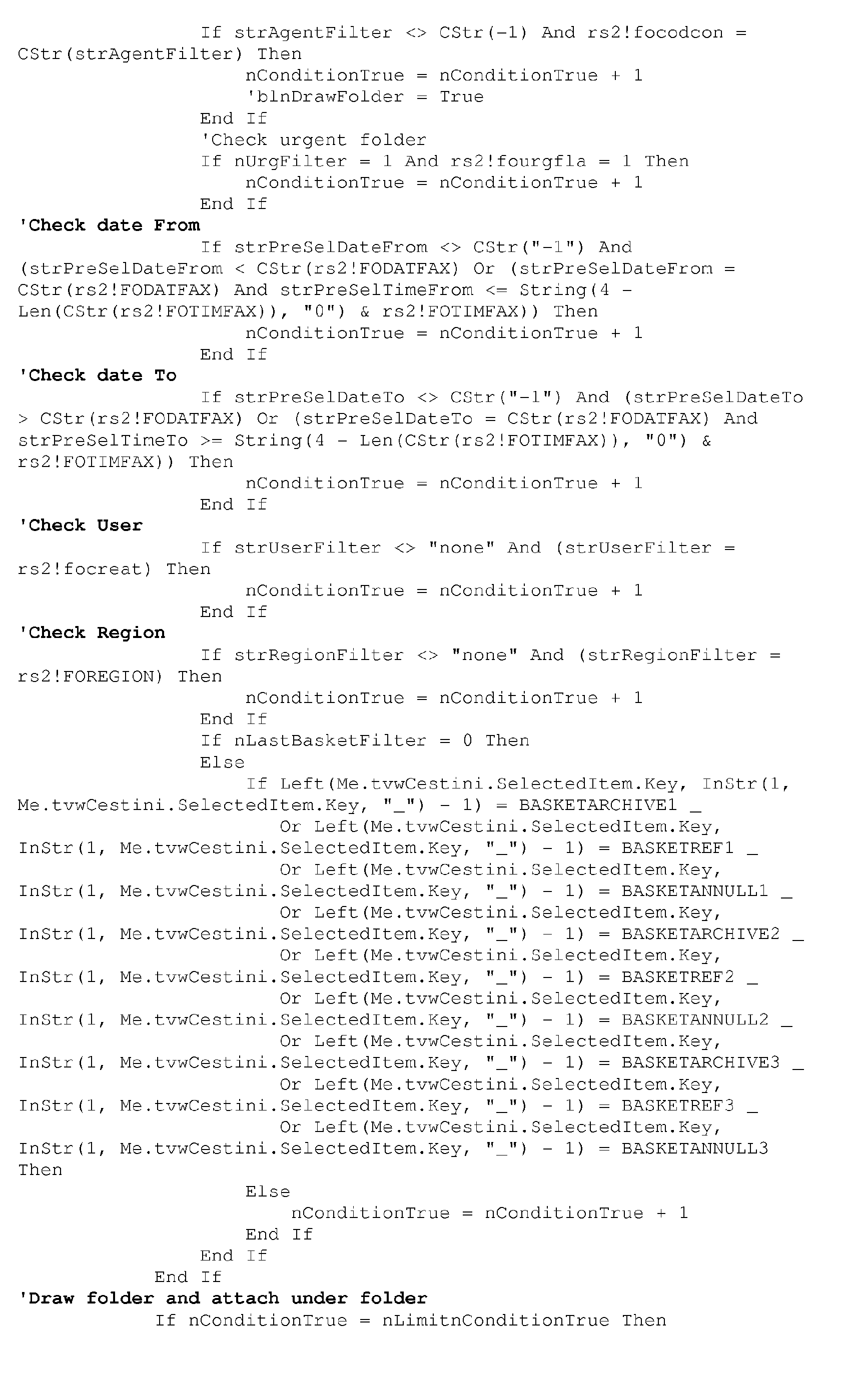

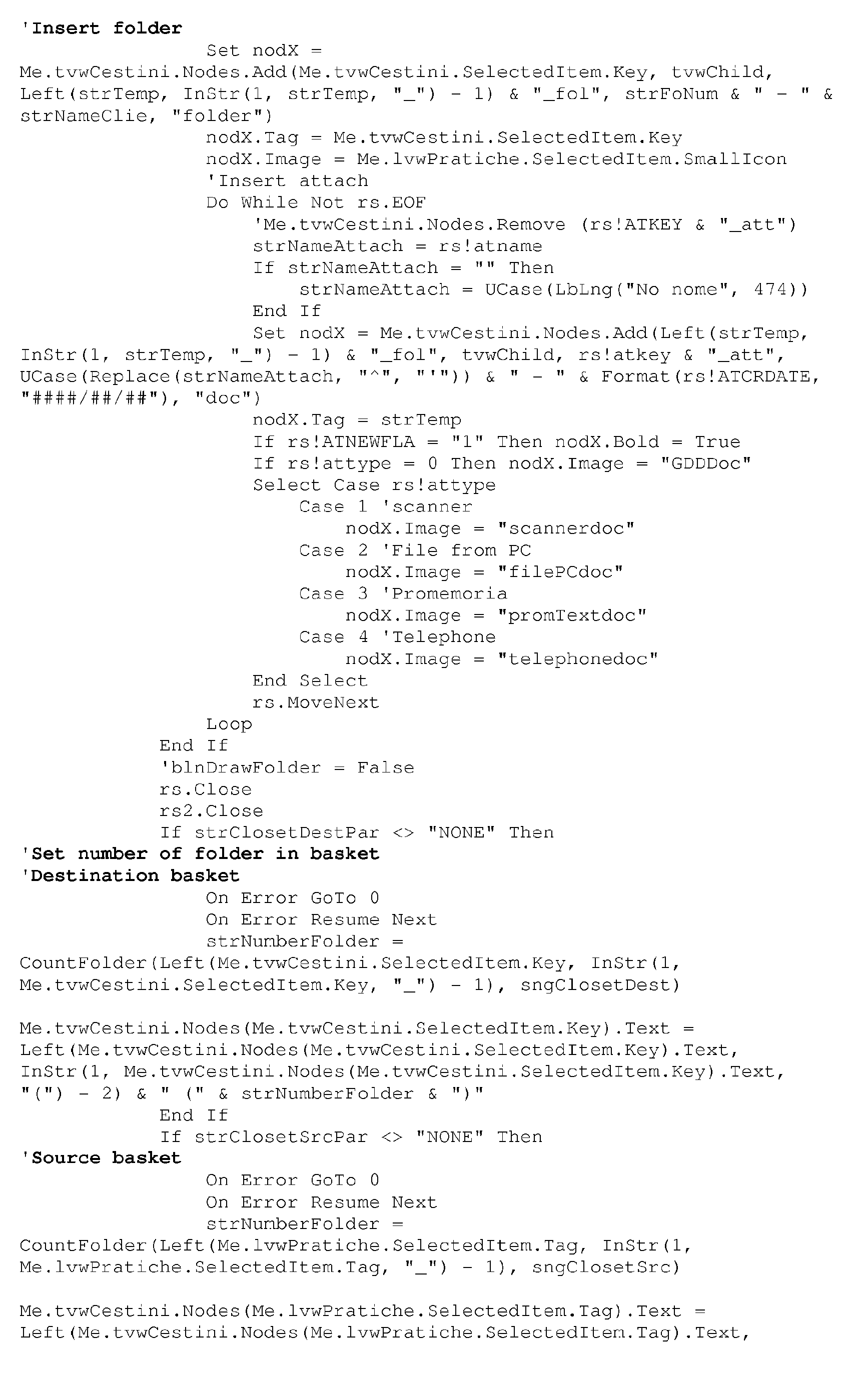

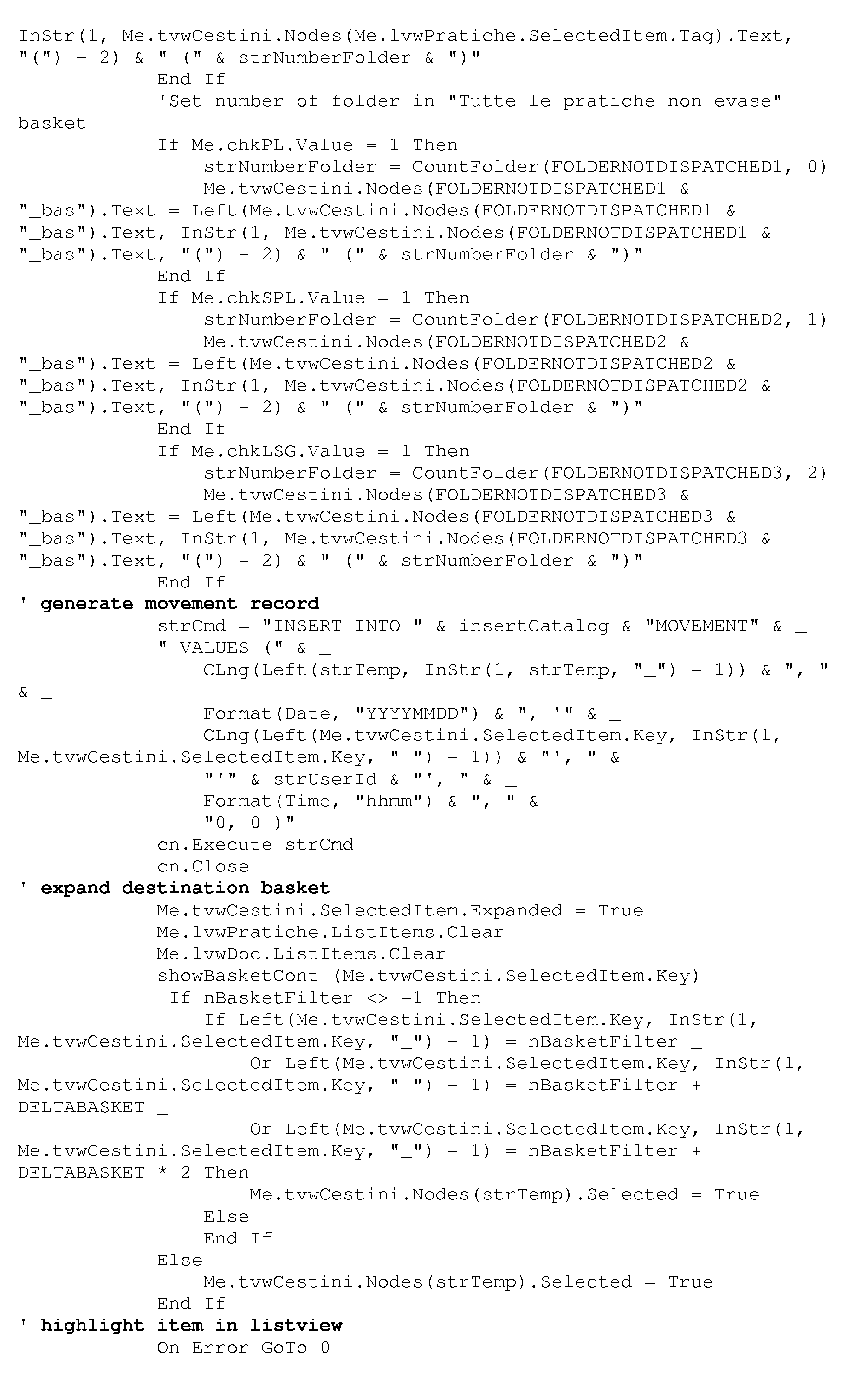

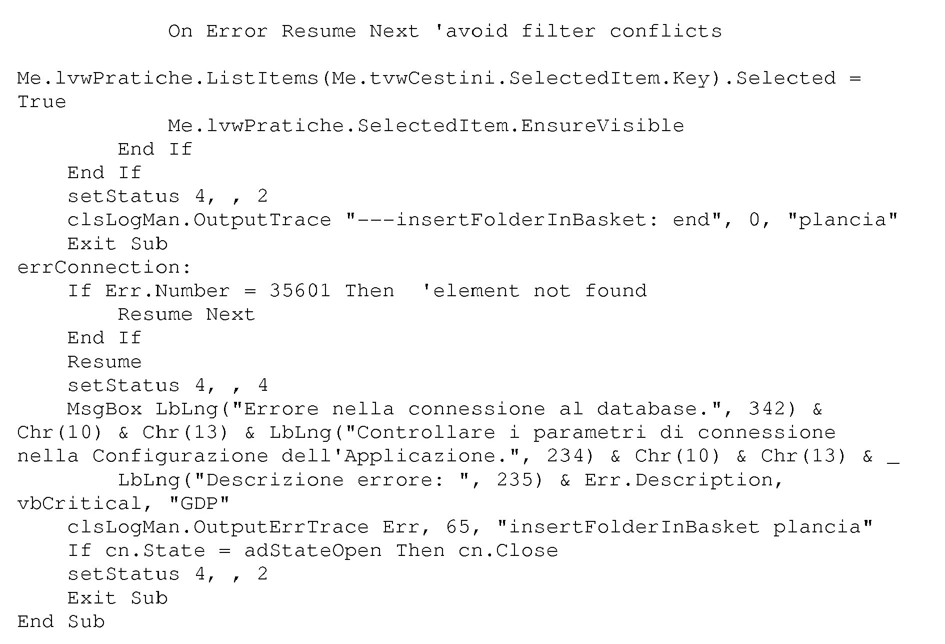

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Further implementation details will not be described, as the man skilled in the art is able to carry out the invention starting from the teaching of the above description.

By means of the present invention, a number of advantages are achieved.

The recording is made automatically by appropriate functions of the information system, and it is made with no intervention by the user, that does not even notice its presence.

The high automation level permits to record a detail quantity much higher than the one that could be stored manually in a reasonable time.

Each time detected is exactly connected to the person who made the operations, to the single document, the business dossier or the project the time is part of.

Moreover, based on the history of the events, the system can automatically activate maps that drive the operator in the successive steps of the job.

An information system made according to the method allows not only to asses the times that were needed for each job, but also to undertake corrective actions to improve the efficiency of the organization.

Although the invention has been described in detail for the purpose of illustration only, it is understood that such detail is solely for that purpose and that many variations, changes, additions and substitutions can be made therein by those of ordinary skill in the art without departing from the spirit and scope of the invention.

## Claims

1. Method in a computer system for the automatic recording of the time needed to carry on activities and for the creation of specific work maps, **characterized in that** it provides for automatic recording of times, based on elements extracted from the activities in the exact moment when events occur; also **characterized in that** it comprises the following steps:
- presenting on a computer screen a graphical map, where items, documents and actions are represented by icons or lists, each action being started by mouse or keyboard operations on one or more of said items;
- creating a configuration table including a list of event types related to said actions, and for each event type the kind of action to be performed and the relating data of the event;
- creating an "Events" database table, where a record is added every time an event occurs, said record including a number of fields related to the event;
- whenever an event occurs, starting the following actions:
- scanning the configuration table to find the kind of the event;
- reading the table to understand where the data of the event can be found;
- preparing a record for the event;
- storing it in the "Events" database table.

2. Method according to claim 1, **characterized in that** said number of fields related to the event in said "Events" database table include:
- Date/time: exact date and time when the event happened (mandatory)
- Kind of event (system event, i.e. arrival of a mail; or user event, i.e. opening of a document)
- User that caused the event (if any)
- Business dossier the event is related to
- Correspondent name

3. Method according to claim 1, **characterized in that** it further comprises the steps of:
starting assessment programs, which, with search procedures and queries available in database systems, aggregate data and create reports;
for each report, making a search upon the "Events" table, using a certain number of fields to limit the search, the resulting record fields being used to prepare a report in text or graphical form.

4. Method according to claim 1, **characterized in that** it further comprises the steps of:
- Preparing configuration tables for all the normal paths of business items or "work maps"
- Every time a business step is done, searching the tables to understand, by the steps aleady passed, if an item can be associated to one of the records in the table
- If a normal work map can be found, proposing the following steps to the user or executing directly one or more steps.

5. Computer program comprising computer program code means adapted to perform all the steps of claims 1 to 4, when said program is run on a computer.

6. A computer readable medium having a program recorded thereon, said computer readable medium comprising computer program code means adapted to perform all the steps of claims 1 to 4, when said program is run on a computer.
